# EUROPÄISCHE PATENTSCHRIFT

(11) **EP 1 395 642 B1**
(45) Veröffentlichungstag und Bekanntmachung des Hinweises auf die Patenterteilung: **11.10.2006**
(21) Anmeldenummer: 01991736.8
(22) Anmeldetag: 20.11.2001
(51) Int. Cl.: C10L 5/44

(54) **VERFAHREN ZUM QUALITÄTSSICHERNDEN KENNZEICHNEN, MARKIEREN BZW. CODIEREN VON PELLETS**
QUALITY CONTROL METHOD FOR IDENTIFYING, MARKING OR CODING PELLETS
PROCEDE PERMETTANT D'IDENTIFIER, DE MARQUER OU DE CODER DES BOULETTES DE MANIERE A ATTESTER DE LEUR QUALITE

(30) Priorität: 23.05.2001 DE 10125522
(43) Veröffentlichungstag der Anmeldung: 10.03.2004
(73) Patentinhaber: Auerbach, Wilfried, 4616 Weisskirchen (AT)
(72) Erfinder: Auerbach, Wilfried, 4616 Weisskirchen (AT)
(74) Vertreter: Wasmeier, Alfons
(86) Internationale Anmeldenummer: PCT/EP2001/013394
(87) Internationale Veröffentlichungsnummer: WO 2003/020854

(56) Entgegenhaltungen:
- DE-U- 20 108 991
- GB-A- 2 305 871
- US-A- 1 881 397
- US-A- 2 948 594
- DATABASE WPI Section Ch, Week 199951 Derwent Publications Ltd., London, GB; Class K05, AN 1999-594663 XP002196219 & JP 11 258386 A (NIPPON NUCLEAR FUELS KK) , 24. September 1999 (1999-09-24)

## Beschreibung

Die Erfindung betrifft ein Verfahren und zum qualitätssichernden Kennzeichnen, Markieren bzw. Codieren von Pellets nach dem Oberbegriff des Anspruches 1.

Mit zunehmender Verknappung fossiler Brennstoffe erlangt die Nutzung nachwachsender Rohstoffe, insbesondere von Pellets aus naturbelassenem Holz, immer größere Bedeutung. Pellets, die für Heizzwecke In Heizbrennem zur Verbrennung kommen, unterliegen der Gefahr einer schlechten Verbrennung, wenn die Ausgangsmaterialien, die bei der Produktion der Pellets verwendet werden, nicht von einwandfreier Qualität sind, insbes. Abfall- und/oder Giftstoffe enthalten, und dadurch entweder keine einwandfreie Verbrennung sicherstellen oder bei Verbrennung die Umwelt belasten. Es ist von entscheidender Bedeutung, dass die verwendeten Ausgangsmaterialien Qualitätsstandards genügen, um einen umweltfreundlichen und kontinuierlichen Heizungsbetrieb zu gewährleisten. Hierzu muß gewährleistet sein, dass die zur Beheizung eingesetzten Pellets brennstofftechnisch eine Reihe von Anforderungen in Hinblick auf die Abmessungen der Pellets, ihre Abriebfestigkeit, ihren Staubanteil, die Rohdichte, den Wassergehalt, den Aschegehalt, den Heizwert, den Schwefel-, Stickstoff- und Chlorgehalt sowie Verunreinigungen des Ausgangsmaterials erfüllen. Pellets von minderer Qualität führen zu Störungen in den Anlagen und damit zur Unzufriedenheit von Kunden sowie Schwierigkeiten mit den Kesselherstellern. Insbesondere müsse qualitativ einwandfreie Pellets frei von Farb-, Lack- und Leimresten, Rückständen aus der Spannplattenverarbeitung, giftigen Stammschutzmitteln, chemischen Zusätzen und chemischen Bindemitteln sein.

Um diesen Qualitätsstandard einhalten zu können, ist es erforderlich, die Qualität von Pellets von der Herstellung bis zum Endverbraucher regelmäßig zu überwachen und dabei die Chargen so zu kennzeichnen, dass Pellets guter von solchen schlechter oder unzureichender Qualität unterschieden werden können, und für entsprechende Überprüfungen die Möglichkeit zu schaffen, Chargen vom Endverbraucher bis zum Hersteller der Pellets zurückverfolgen zu können. Es muß gewährleistet sein, dass einwandfreies Material beim Verbraucher bzw. am Heizbrenner ankommt, da dieser nicht mit bloßem Auge und auch kaum mit komplizierter Meßtechnik feststellen kann, ob das ihm gelieferte Material den Qualitätsanforderungen entspricht. Den Herstellern von Pellets, die an der Lieferung einwandfreier Produkte interessiert sind, ist somit entscheidend daran gelegen, ihre Qualitätsansprüche und -vorgaben lückenlos einzuhalten und zu überwachen, und damit einen Standard zu erreichen, der dem von Heizöl entspricht. Dazu ist notwendig, peinlich genau darauf zu achten, dass das Pellet-Ausgangsmaterial eine hohe Qualität hat und dass verhindert bzw. zurückverfolgt werden kann, dass und an welcher Stelle auf dem Weg vom Pellethersteller zum Pelletverbraucher schlechtes Pelletmaterial beigemischt wird oder von vorneherein Pellets aus minderer Qualität des Ausgangsmaterials hergestellt werden. Für eine derartige Qualitätssicherung ist die lückenlose Nachvollziehbarkeit aller Stoffströme von der Pelletierung bis zum Endkunden unabdingbar.

Die Einhaltung dieser hohen Qualitätsnormen ist mit einem hohen Kostenaufwand verbunden, und es ist deshalb umso wichtiger, dass die Qualitätsnormen eingehalten werden und auch regelmäßig überprüfbar sind, um stets gleichbleibende Mindestqualitäten für die Pellets zu gewährleisten. Da nicht verhindert werden kann, dass "schwarze Schafe" Pellets geringer Qualität mit erheblich niedrigeren Kosten auf den Markt bringen, ist es erforderlich, Wege zu finden, um die Lieferungen jederzeit auf Qualität überprüfen und bei festgestellter Minderqualität die Herkunft der Ware bis zu der Schwachstelle zurückzuverfolgen zu können.

Diese Forderungen lassen sich derzeit nur durch eine Chargenkennzeichnung erfüllen. Eine vergleichbare Kennzeichnung ist bisher für lose Festbrennstoffe, z.B. Kohle oder dergl. nicht bekannt, so dass technische Lösungen für eine Chargenkennzeichnung bisher nicht vorliegen.

Aus der US 1,881,397 ist eine Vorrichtung zum Herstellen von gekennzeichneten, markierten oder codierten Pellets aus naturbelassener Biomasse bekannt, mit der Pellets bzw. Briketts im Zuge der Herstellung, also gleichzeitig die hergestellte Gesamtmenge an Pellets gekennzeichnet, insbesondere an einer Stirnseite geprägt werden, und damit alle Briketts bzw. Pellets einer Charge oder einer Produktion eines Herstellers von denen anderer Hersteller unterscheidbar sind.

Des weiteren sind aus der US 2,948,594 mit leicht brennbarer Überzugsmasse versehene Briketts aus Holzkohle und Holzabfall in Faserform bekannt, die der leichteren Brennbarkeit wegen zum Anzünden und zur besseren Entflammbarkeit von Holzkohle eingesetzt werden können. Solche Briketts können auch in bestimmter Farbe oder anderer Oberflächenbeschaffenheit auf den Markt gebracht werden, wobei es bei der Farbgebung lediglich darauf ankommt, den Briketts ein attraktiveres Aussehen zu geben, nicht aber, irgendwelche Kontrollfunktionen zu erzielen.

Aufgabe der Erfindung ist, hierfür Lösungen anzuzeigen, mit denen dies erreicht wird, nämlich einerseits festzustellen und zurückzuverfolgen, wo bzw. in welcher Stufe der Bereitstellung der Pellets vom Erzeuger zum Verbraucher Schwachstellen vorhanden sind, und andererseits zu prüfen, ob eine Charge den Qualitätsvorgaben bzw. -anforderungen entspricht.

Gemäß der Erfindung wird dies mit den kennzeichnenden Merkmalen des auf ein Verfahren gerichteten Anspruches 1 erreicht. Weitere Ausgestaltungen der Erfindung sind Gegenstand der Unteransprüche.

Grundsätzlich können derartige Kennzeichnungen, Markierungen oder Codierungen so vorgenommen werden, dass
a) einzelne Pellets in gleich bleibender Weise präpariert werden,
b) einzelne Pellets in zeitlichen Abständen variiert präpariert werden,
c) sich von den Pellets unterscheidende einzelne Markier- oder Codierteilchen den Pellets im Verhältnis von z.B. 1 Markier- oder Codierteilchen pro 10 kg Pellets beigegeben werden,
d) einzelne Pellets durch Beeinflussen, Behandeln und Bearbeiten der

Nach einem Aspekt der Erfindung werden z.B. den Pellets vor, bei oder nach dem Pressvorgang, bei ihrer Lagerung oder auf ihrem Transportweg bis zur Abgabe an den Kunden Codierelemente dosiert und in vorgegebenem, vorzugsweise geringem Mischungsverhältnis (von z.B. 1:1000 bis 1:100 000) beigemischt, so dass eine Charge reiner Pellets und eine vergleichsweise geringe Anzahl von Markier- bzw. Codierelementen miteinander zu einem Haufen aufgeschüttet oder in einem Container, Behälter, oder dgl., oder wahlweise auch lose für den Transport bereitgestellt und transportiert werden. Die Markier- bzw. Codierelemente sind somit über den gesamten Vorrat bzw. eine gesamte Charge von Pellets etwa gleichförmig verteilt. Da sie sich von den Pellets durch ihre Form, ihre Farbe und/oder durch andere äußere und/oder innere Kennmerkmale unterscheiden, lassen sie sich, z.B. mit bloßem Auge, relativ einfach feststellen, so dass durch eine erste Inaugenscheinnahme der Prüfer feststellen kann, ob die Pelletcharge in vorgeschriebener Weise (aufgrund der darin enthaltenen Kennzeichnungs- oder Markierungsefemente) aus einem Betrieb stammt, der sich verpflichtet hat, die Qualitätsnorm zu erfüllen, und sie auch eingehalten hat. Andererseits läßt sich, wenn Pellets minderer Qualität verbrannt werden und aufgrund dieser minderen Qualität Probleme an der Heizungsanlage auftreten (die Pellets also den hohen Qualitätsanforderungen der Norm nicht entsprechen, obwohl ihnen in betrügerischer Absicht entsprechende Markierelemente beigegeben worden sind), der Weg dieser Pelletchargen zurückverfolgen und die Stelle ermitteln, an der die Markierelemente mit der Pelletcharge minderer Qualität gemischt worden sind bzw. aus welcher Produktionsstätte die Pelletcharge minderer Qualität stammt.

Da die Pellets chargenweise unmittelbar bei oder im Anschluß an die Herstellung entsprechend so behandelt oder gekennzeichnet werden, dass mit relativ einfachen Mitteln festgestellt werden kann, dass sie aus einem Herstellbetrieb stammen, der die Qualitätsnorm erfüllt, ist es für Hersteller, die Pelletchargen minderer Qualität auf den Markt bringen, sehr schwierig, wenn nicht unmöglich, die Behandlung oder Kennzeichnung nachträglich vorzunehmen und Pellets schlechter Qualität in unzulässiger Weise mit der Qualitätskennzeichnung zu vertreiben.

Dieser Pellet-Behandlungs- bzw. -Kennzeichnungsvorgang (der auch als Impfen bezeichnet werden kann), wird in der Regel bereits in der Produktionsanlage vorgenommen, indem z.B. die einzelnen Chargen von Pellets beim Austritt aus der Presse in heißem Zustand oder beim Austritt aus dem anschließenden Kühler entsprechend behandelt werden, z.B. durch Zumischung von Kennzeichnungs- und Markierelementen in einem geringen Mischungsverhältnis, wobei das Zumischen in einer fest vorgegebenen, z.B. in zeitlich versetztem Abstand durchgeführten, Dosierung erfolgt, um eine gründliche und gleichmäßige Verteilung der Kennzeichnungs- und Markierungselemente in der Pelletcharge zu erreichen. Das Zumischen dieser Elemente basiert darauf, dass diese Elemente bzw. Teilchen so ausgebildet werden, dass sie sich in Form und/oder Farbe und/oder nach anderen Kriterien von den Pellets unterscheiden, z.B. eine herstellerspezifische Codierung aufweisen.

Die Beigabe von Codierelementen kann aber auch bereits im Ausgangsmaterial vor dem Pressen der Pellets oder aber in einem späteren Stadium zwischen Abgabe der Pellets aus der Presse, und vor Auslieferung der Pellets an den Endverbraucher erfolgen, also auch während der verschiedenen Transportstufen oder Zwischenlagerungen.

Wahlweise oder zusätzlich können Kennzeichnungs- oder Markierungselemente auch geprägt oder mit anderen Markierungen versehen werden, z.B. mit Magnetpartikeln, mit Fluoreszenzfarbe und dgl. Grundsätzlich ist für die Erfindung wesentlich, dass Beimischungen bzw. Kennzeichnungs- oder Markierungselemente allgemein so beschaffen sind, dass sie in der Charge gut erkennbar bzw. feststellbar sind, dass aber trotzdem eine einwandfreie, saubere Verbrennung sichergestellt wird, damit am Brenner keine durch das Brennmaterial bedingten Störungen auftreten.

Des weiteren können entweder alle Pellets einer Charge (was in der Regel wegen des relativ hohen Aufwandes nicht praktikabel ist) oder ein kleiner Teil der Pellets selbst als Kennzeichnungs- oder Markierungselemente ausgebildet werden, indem die Elemente z.B. in Kontrastfarben zu der natürlichen Materialfärbung ausgeführt, mit Prägungen einschließlich Codieren mittels Laserstrahlen, wie z.B. Rillen oder entsprechenden Verformungen, Deformationen, Aufdrucken oder einem entsprechenden Produzentencode versehen werden, beispielsweise eine fluoreszierende Oberflächenschicht aufweisen, oder mit Metallpartikeln oder entsprechenden leitenden Überzügen versehen werden, oder Mikrochips in einzelne Pellets eingesetzt werden, oder beliebige andere herstetterbezogene Markierungen mit den bzw, mit einzelnen Pellets verbunden werden, etc., wobei nicht verbrennbare Rückstände mechanisch, z.B. über einen Rost, zurückgehalten werden können.

Mit einer derartigen, vorbeschriebenen Beimischung von herstel lerbezogenen Kennzeichnungs- oder Markierelementen, oder aber einer entsprechenden Behandlung der Pellets selbst wird erreicht, dass die Pelletchargen von Herstellern, die den Qualitätsnormen entsprechende Pellets produzieren, liefern und garantieren, erreicht, dass herkömmliche Pellets minderer Qualität festgestellt und von solchen einwandfreier Qualität unterschieden werden können, und dass dann, wenn Pelletchargen minderer Qualität für den Heizvorgang geliefert werden, die zu Störungen bei der Verbrennung führen, aufgrund dieser zusätzlichen Maßnahmen der Kennzeichnung der Pellets die Möglichkeit besteht, den Weg dieser Pellets über die einzelnen Verteilerstellen bis zum Hersteller zurück zu verfolgen, so dass die Schwachstelle ausgemacht werden kann und entsprechende Maßnahmen gegen den betrügerischen Lieferanten oder Produzenten eingeleitet werden können, wahlweise der Endverbraucher davon überzeugt werden kann, in Zukunft einwandfreie, der Qualitätsnorm entsprechende Pellets zu kaufen.

Zum Codieren der Pellets wird in der speziellen Figurenbeschreibung eine Vorrichtung erläutert, die so ausgebildet ist, dass sie einzelne Teilchen, die etwa in Pelletgröße von Holzleisten oder entsprechendem brennbarem Material abgeschnitten werden, mit einer Codierung versehen werden, die durch Aufdrucken eines Farb-Kennzeichens über Stempelräder arbeitet, wobei die Holzleisten, aus denen die den Pellets beizumischenden vereinzelten Markierteilchen nach dem Codieren abgeschnitten werden, mittels einer Vorschubeinheit durch die Maschine geführt und am ausgangsseitigen Ende in entsprechende Teile gewünschter Länge geschnitten werden. Die Maschine kann dabei so ausgelegt sein, dass sie die Holzleisten in mehreren parallelen Bahnen zuführt und dass Steuernocken den Vorschub, die Drehung der Stempelräder und die Betätigung der Schneidmesser steuern, um einen versetzten Betrieb zu erzielen.

Das Codieren der Markierteilchen kann im Falle vorliegender Erfindung entweder durch Farbauftrag, durch Prägen, durch Einbrennen mit Hilfe von Lasern, oder entsprechende Maßnahmen erfolgen. Es kommt hierbei ausschließlich darauf an, dass die vereinzelten Markierteilchen, oder auch einzelne Pellets selbst, die aus dem Strom der Pelletanlage abgezweigt werden, Markierungen erhalten, die es ermöglichen, zu einem späteren Zeitpunkt die beigemischten Markierteilchen bzw. die beigemischten codierten Pellets von der Masse der Pellets zu unterscheiden.

Nachstehend wird die Erfindung in Verbindung mit der Zeichnung anhand eines Ausführungsbeispieles erläutert. Es zeigt:
- Fig. 1: in schematischer Darstellung die Herstellung der Pellets und Kennzeichnungs- oder Markierungselemente und ihren Transportweg zum Verbraucher,
- Fig. 2: in schematischer Darstellung eine weitere Ausführungsform der Erfndung mit einer Vorrichtung zur Oberflächenbehandlung der bzw. einiger Pellets,
- Fig. 3: in schematischer Darstellung eine weitere Ausführungsform der Herstellung von Pellets mit einer Vorrichtung zur Veränderung der Oberfläche aller Pellets,
- Fig. 4: eine spezielle Ausführungsform der Erfindung nach Fig. 1, bei der im Prinzip aus einem Holzstab die einzelnen Markierelemente geschnitten werden,
- Fig. 5: eine Ausführungsform eines Pellet-Codierers in geöffneter, seitlicher Ansicht, und
- Fig. 6: die Darstellung des Pellet-Codierers nach Fig. 5 in teilweise geöffneter Darstellung, in Frontansicht.

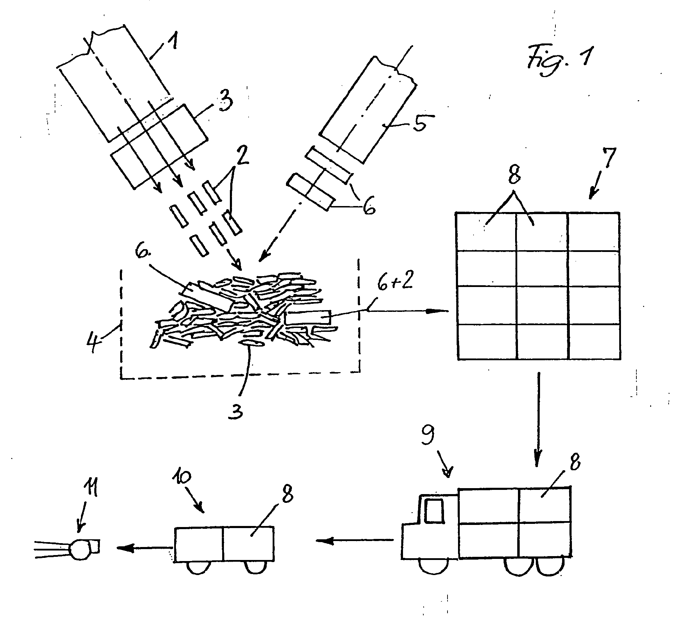

Bei der Darstellung nach Fig. 1 ist eine Presse 1 schematisch angedeutet. Die Pellets 2, die in herkömmlicher Weise in der Presse hergestellt werden, werden in einer Kühlvorrichtung 3, die mit der Presse kombiniert sein kann, abgekühlt und anschließend auf einen Haufen 3 abgegeben oder in einem Container 4 zwischengespeichert. Mit 5 ist eine Vorrichtung angedeutet, die Kennzeichnungs- und Markierelemente oder -teilchen6 erzeugt, und die im gewünschten Mischungsverhältnis zu den Pellets die Markierelemente 6 ebenfalls dem Pellethaufen 3 zuführt, so dass schließlich eine geringe Anzahl von Elementen 6 in einer großen Anzahl von Pellets 3 enthalten sind. Die Kennzeichnungs- und Markierelemente oder -teilchen 6, die von der Vorrichtung 5 hergestellt werden, sind Elemente, die in ihrer Materialzusammensetzung gleich oder ähnlich den herkömmlichen Pellets 2 sein können, die sich aber entweder in ihrer Form, ihrer Oberflächenbeschaffenheit, ihrer Zusammensetzung oder entsprechenden von außen feststellbaren Merkmalen und Kennzeichen von den Pellets unterscheiden lassen.

Die Mischung aus Pellets 3 und Elementen 6 wird z.B., wie mit 7 schematisch angedeutet, gespeichert, z.B. in Einzelcontainern 8, die mit Transportfahrzeugen 9 zu den Verteilerstellen gebracht werden, von wo sie mit Fahrzeugen 10 an den Verbraucher 11, bei dem sie verheizt werden, geliefert werden.

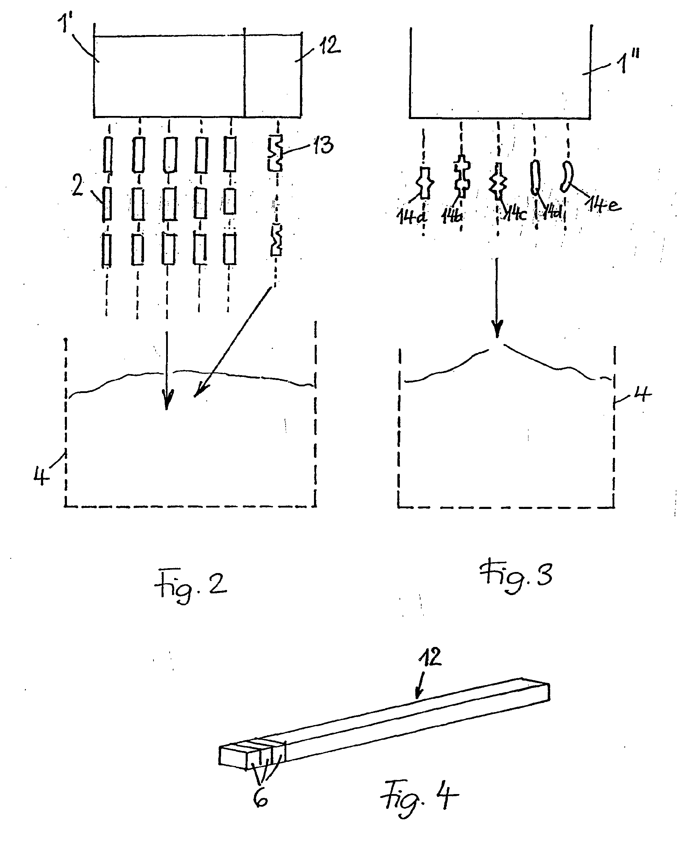

Bei der Ausführungsform nach Fig. 2 sind alle Pellets in der Presse 1' in herkömmlicher Weise hergestellt. Ein geringer Teil dieser Pellets wird bereits in der Presse oder nach Verlassen der Presse abgezweigt und in einer getrennten Vorrichtung 12 behandelt, und zwar entweder in bezug auf die äußere Formgebung, die Oberflächenbeschaffenheit oder die innere Zusammensetzung. Anschließend werden diese Pellets 13 dem Strom von Pellets 2 wieder beigemischt und anteilig entsprechend dem gewünschten Mischungsverhältnis in den Pellethaufen gleichförmig verteilt eingeführt oder zu einem späteren Zeitpunkt zugegeben.

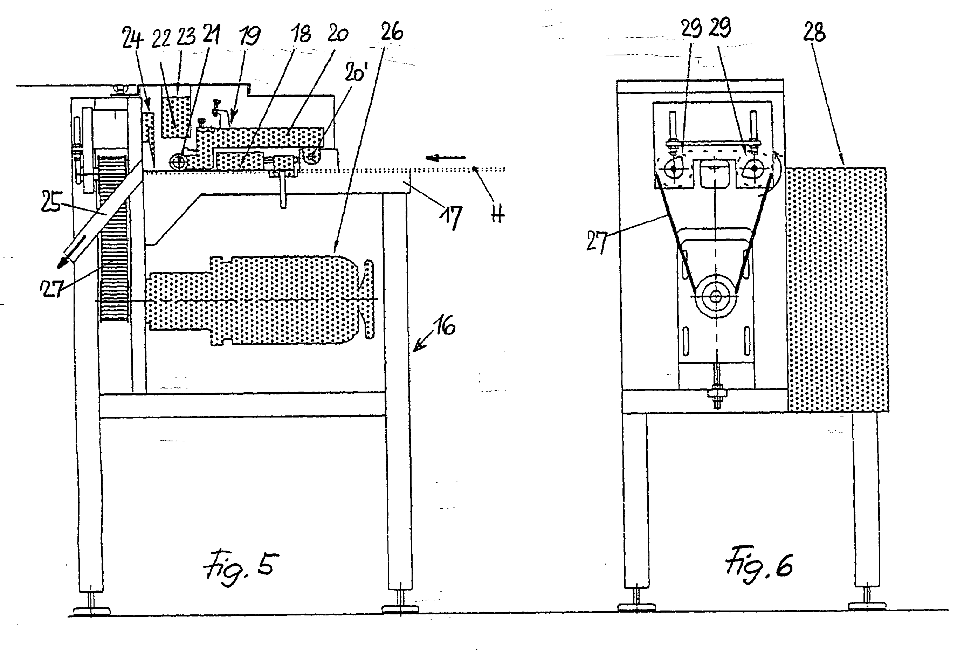

Nach der Ausführungsform nach Fig. 3 werden alle Pellets in herkömmlicher Weise in einer Pelletanlage 1" hergestellt und alle Pellets verformt bzw. behandelt, um sie von anderen bzw. "normalen" Pellets zu unterscheiden. Diese Verformungen bzw. Behandlungen können in gewissen Zeitabständen variiert werden, dies geschieht durch Verwenden geänderter Presswerkzeuge oder Behandlungsvorrichtungen. Die die Presse 1" verlassenden Pellets 14 unterscheiden sich von herkömmlichen Pellets insbesondere durch ihre äußere Formgebung, können jedoch auch so ausgebildet sein, dass sie in der Presse 1" auch in ihrer Konsistenz bzw. in ihrer inneren Beschaffenheit geimpft oder in entsprechender Weise behandelt werden.

Beispielsweise kann die Behandlung der Oberfläche der Pellets das Pressen von Rillen oder dergl. Oberflächen-Verformungen mit einschließen, die die Pellets in kennzeichnender und markierender Weise von normalen Pellets unterscheidet, es können vieleckige, sternförmige oder beliebige andere Formen aus Hobel- und Sägespänen gepresst werden, die sich von den herkömmlichen Pellets unterscheiden. Einer derartigen äußeren Formgebung ist durch die erfindungsgemäßen Ausführungsbeispiele keine Beschränkung gesetzt.

Die schematische Darstellung nach Fig. 4 zeigt eine Ausführungsform von Markierelementen in Form eines Holzstabes 15, der quer zur Längsfaserrichtung in einzelne Elemente 6 geschnitten wird, um die entsprechende mechanische Festigkeit und Beschaffenheit der Elemente 6 zu erreichen, die eine einwandfreie Verbrennung gewährleisten. Die Abmessungen der Markierelemente 6 entsprechen etwa denen der Pellets, wobei diese Abmessungen je nach Material und spezifischen Gegebenheiten sowohl nach oben als nach unten abweichen können.

In den Figuren 5 und 6 ist eine Ausführungsform einer Maschine zum Codieren von Pellets für die Zwecke vorliegender Erfindung dargestellt. Ein Maschinenrahmen 16 nimmt hierbei eine Tischplatte 17 zum Zuführen von Holzleisten, -stäben oder dergl. H auf, die von einer Vorschubeinheit 18 erfasst und einer Stempelvorrichtung 19 zugeführt werden, die aus einem bei 20' gelagerten Hebel 20 mit Stempelrad 21 besteht. Das Stempelrad 21 bringt entsprechende Markierungen auf die Leiste, den Stab usw. auf und wird über ein Stempelkissen 22 mit Farbauftrag gespeist. Das Stempelkissen 22 ist beispielsweise an einem Klappdeckel 23 befestigt. Nachdem die Codierung aufgebracht worden ist, wird die Leiste in den Schnittbereich eines Schneidmessers 24 vorgeschoben, das entsprechende Abschnitte der Leiste abtrennt. Von der Trennstelle aus werden die abgetrennten Teilchen in einen Abgabekanal 25 abgegeben, von wo sie den Pellets in der gewünschten Dosierung (z.B. ein codiertes Teilchen auf 10 kg Pellets) beigemischt werden.

26 bezeichnet in der Zeichnung einen Antriebsmotor, 27 eine Antriebsübertragung, 28 eine Steuerung. Zur Erhöhung des Durchsatzes an codierten Teilchen ist die Pellet-Codiervorrichtung so ausgelegt, dass zwei Arbeitsstränge parallel zueinander vorgesehen werden, wobei die Codierung im Wechseltakt in beiden Strängen erfolgt. Hierzu sind Steuernocken 29, die versetzt zueinander und im Gegentakt arbeiten, vorgesehen.

## Patentansprüche

1. Verfahren zum qualitätssichernden Kennzeichnen, Markieren oder Codieren, sowie zum Kontrollieren von aus naturbelassener, primärer Biomasse, z. B. Holz, Pflanzen oder dgl. nachwachsenden Rohstoffen hergestellten Pellets für Heizzwecke, **dadurch gekennzeichnet, dass**
a) den Pellets vor, bei oder nach dem Preßvorgang oder zwischen Kühlvorgang und Abgabe in den Lagerraum des Endverbrauchers Kennzeichnungs-, Markierungs- oder Codierungselemente zugegeben werden, die von den Pellets ohne Markierung unterscheidbar sind,
b) der Anteil an Kennzeichnungs-, Markierungs- oder Codierungselementen einen geringen Bruchteil der Gesamtmenge der Pellets beträgt, und
c) die Kennzeichnungs-, Markierungs- oder Codierungselemente in möglichst gleichmäßiger Weise über die Menge von Pellets ohne Codierung verteilt zugemischt werden.

2. Verfahren nach Anspruch 1, **dadurch gekennzeichnet, dass** die Kennzeichnungs-, Markierungs- oder Codierungselemente maschinell und dosiert der Pelletcharge mit kontinuierlichem Mischungsverhältnis zugemischt werden.

3. Verfahren nach Anspruch 1, **dadurch gekennzeichnet, dass** die Kennzeichnungs-, Markierungs- oder Codierungselemente der Pelletcharge so zugemischt werden, dass sie in der Pelletcharge mit bloßem Auge oder mit Hilfsmitteln von außen feststellbar sind.

4. Verfahren nach einem der Ansprüche 1 -3, **dadurch gekennzeichnet, dass** die aus der Presse oder der Kühlvorrichtung kommenden Pellets, und die aus einer Kennzeichnungs- oder Markierungsmaschine stammenden Elemente in einem einstellbaren Mischungsverhältnis mit geringem Anteil an Kennzeichnungs-, Markierungs- oder Codierungselementen einer Pelletcharge beigemischt werden.

5. Verfahren nach Anspruch 1, **dadurch gekennzeichnet, dass** ein geringer Teil der in der Presse hergestellten Pellets während oder im Anschluß an den Preßvorgang mit einer Kennzeichnung, einer Markierung oder einer Codierung auf ihrer Oberfläche durch Veränderung der Form oder Beschaffenheit dieser Oberfläche versehen werden.

6. Verfahren nach Anspruch 1, **dadurch gekennzeichnet, dass** mindestens ein Teil der in der Presse hergestellten Pellets während oder im Anschluß an den Preßvorgang mit einer maschinell auslesbaren Codierung geimpft werden, z.B. mit Metallpartikeln für ein späteres magnetisches Aufspüren, einem Speicherchip für ein späteres elektronisches Auslesen, oder mit Markierungssubstanzen, z.B. chemischen Substanzen, metallischen Substanzen oder dergl., oder wahlweise mit minimal radioaktiven Substanzen etc. versehen werden.

7. Verfahren nach Anspruch 1, **dadurch gekennzeichnet, dass** den Pellets ohne Codierung zusätzliche Kennzeichnungs-, Markierungs- oder Codierungselemente in Pelletsform zugemischt werden, indem diese zusätzlichen Elemente durch Behandeln, insbesondere Einbringen, Aufbringen, Zugeben oder Impfen von Pellets durch Kennzeichen, Markierungen oder Codierungen, die die äußere Form oder Beschaffenheit bzw. die inneren Eigenschaften der Pellets verändern, beeinflusst werden.

8. Verfahren nach Anspruch 7, **dadurch gekennzeichnet, dass** die Kennzeichnungs-, Markierungs- oder Codierungselemente dosiert und in einem vorgegebenen geringen Mischungsverhältnis den Pellets, die aus der Presse oder aus dem Kühler abgegeben und lose gehäuft werden, oder während des Transports oder einer Zwischenlagerung gleichförmig beigemischt werden.

9. Verfahren nach Anspruch 1, **dadurch gekennzeichnet, dass** die Kennzeichnungs-, Markierungs- oder Codierungselemente aus einem Material hergestellt werden, das rückstandsfrei verbrennbar ist, das eine mechanisch problemlose Beschaffenheit und Festigkeit hat, und das in einem Pellethaufen als Einzelelement sichtbar bzw. erkennbar ist.

10. Verfahren nach Anspruch 1, **dadurchgekennzeichnet, dadurch gekennzeichnet, dass** die Pellets mit Markierungssubstanzen **gekennzeichnet** bzw. codiert werden, und dass als Markierungssubstanzen chemische, in der Natur nicht vorkommende Verbindungen bzw. Substanzen, Spuren von radioaktiven Substanzen, Spuren von Metallen oder dergl. rückverfolgbare Substanzen werden, die wahlweise dem Ausgangsmaterial für die Pelletherstellung oder den Pellets bei der Herstellung beigegeben werden, oder die auf die Oberfläche der Pellets aufgebracht werden.

11. Verfahren nach Anspruch 10, **dadurch gekennzeichnet, dass** die Pellets auf ihrer Oberfläche oder in ihrer äußeren Form verändert werden, und dass diese Veränderungen durch Formwerkzeuge in der Presse oder durch nachträgliche Bearbeitung bzw. Behandlung erzielt werden.

12. Verfahren nach Anspruch 9 oder 10, **dadurch gekennzeichnet, dass** die Kennzeichnungs- und Markierungselemente in Kontrastfarbe zu den Pellets gefärbt werden, oder dass wahlweise ein geringer Teil der Pellets selbst durchgehend oder auf ihrer Oberfläche gefärbt werden.

13. Verfahren nach einem oder mehreren der Ansprüche 10 - 12, **dadurch gekennzeichnet, dass** die Kennzeichnungs- oder Markierungselemente oder wahlweise ein geringer Teil der Pellets selbst mit Prägungen, Marken, Aufdrucken, einem Produzentencode oder entsprechenden anderen Codierungen versehen werden.

14. Verfahren nach einem der Ansprüche 10 - 13, **dadurch gekennzeichnet, dass** die Kennzeichnungs- oder Markierungselemente oder wahlweise die Pellets selbst mit einer reflektierenden oder fluoreszierenden Oberflächenschicht versehen werden.

15. Verfahren nach einem oder mehreren der vorausgehenden Ansprüche, **dadurch gekennzeichnet, dass** die Kennzeichnungs- oder Markierungselemente oder wahlweise die Pellets selbst mit Markierungen aus Metall, elektrisch oder magnetisch leitenden Teilchen oder Überzügen, von außen identifizierbaren Speicherchips, oder herstellerbezogenen entsprechenden Markierungen oder Codierungen versehen werden.

16. Verfahren nach Anspruch 1, **dadurch gekennzeichnet, daß** die Kennzeich-nungs- oder Markierungselemente in Form von Abschnitten von Holzleisten, Holzstäben oder dergl., insbes. in Längs- oder Querrichtung zur Faser geschnitten, ausgebildet sind.

## Claims

1. Method for quality safeguarding characterisations, markings or codings, as well for controlling pellets produced from natural primary biomaterial, for example wood, plants or similar growing raw materials for heating purposes,
**characterised in that**
a) characterisation, marking or coding elements are added to the pellets before, at or subsequent to the powerpressing process or between the cooling process and discharging the pellets into the storage room at the end consumer, which elements can be differentiated from the pellets having no marking,
b) the proportion of the characterisation, marking or coding elements is a small percentage of the entire amount of the pellets, and
c) the characterisation, marking or coding elements are continuously distributed over the amount of pellets without any coding.

2. Method according to claim 1, **characterised in that** the characterisation, marking or coding elements are added to the pellet charge automatically and in a dosed manner with a continuous mixing proportion.

3. Method according to claim 1, **characterised in that** the characterisation, marking or coding elements are added and mixed to the pellet charge so that they can be made out within the pellet charge by the naked eye or by auxiliary means from outside.

4. Method according to one of claims 1 - 3, **characterised in that** the pellets ejected from the power press or the cooling means, and the elements from a characterisation or marking machine are added to the pellet charge in an adjustable mixing proportion with a small percentage of characterising, marking or coding elements.

5. Method according to claim 1, **characterised in that** a small proportion of the pellets produced within the power press is provided with a characterisation, a marking or a coding at their surface by altering the shape or structure of the surface during or subsequent to the pressing process.

6. Method according to claim 1, **characterised in that** at least part of the pellets leaving the power press are injected by a machine readable coding during or subsequent to the pressing process, for example by means of metal particles for later magnetic sensing, a storage chip for later electronic reading ,or by marking substances, for example chemical substances, metallic substances or the like, or alternatively by radioactive substances with minimum radioactivity, or the like.

7. Method according to claim 1, **characterised in that** additional characterisation, marking or coding elements in pellets form are added by treating said additional elements, for example by providing, applying, adding or injecting pellets having characteristics, markings or codings altering the outer form or structure or alternatively the inner characteristics of the pellets.

8. Method according to claim 7, **characterised in that** the characterisation, marking or coding elements are added in a dosed manner and with a predetermined small mixing proportion of the pellets which are discharged from the power press or the cooler and are loosely formed to a heap, or will be uniformly mixed during the transport or intermediate storage.

9. Method according to claim 1, **characterised in that** the characterisation, marking or coding elements are made of a material, which can be burnt without any residues, which has sufficient mechanical structure and stability, and which is visible or can be recognized as individual elements within a heap of pellets.

10. Method according to claim 1, **characterised in that** the pellets are **characterised** or coded by means of marking substances, and that the marking substances can be chemicals, combinations or substances, which are not available naturally, traces of radioactive substances, traces of metals or similar substances which can be prosecuted backwardly and can be added to the starting material for the pellet production or the pellets during the manufacturing process, or which are applied onto the surface of the pellets.

11. Method according to claim 10, **characterised in that** the surface or the outer shape of the pellets is altered and that such alterations are obtained by shaping tools within the power press or by subsequent treatment or operation.

12. Method according to claim 9 or 10, **characterised in that** the characterisation and marking elements are dyed in a colour, which is in contrast to the colour of the pellets, or that alternatively a small proportion of the pellets themselves are stained-through or are coloured on their surface.

13. Method according to one or several of claims 10 - 12, **characterised in that** the characterisation or marking elements or alternatively a small proportion of the pellets themselves are provided by stamping, marking, imprinting, of a producer's code or corresponding other codings.

14. Method according to one of claims 10 - 13, **characterised in that** the characterisation or marking elements or the pellets themselves are provided with a reflecting or fluorescing surface layer.

15. Method according to one or several of the preceeding claims, **characterised in that** the characterisation or marking elements or the pellets themselves are provided with markings made from metal, electrically or magnetically conducting particles or coatings, storage chips which can be identified from outside, or any other producer-related corresponding markings or codings.

16. Method according to claim 1, **characterised in that** the characterisation or marking elements are formed as cuttings from wooden bars, ledges or the like, which especially are cut in the longitudinal or transversal direction in relation to the fibres.

## Revendications

1. Procédé d'étiquetage, de marquage ou de codage qualitatifs, ainsi que de contrôle de pellets fabriqués à partir de matières premières renouvelables naturelles de biomasse primaire, par exemple le bois, les végétaux ou autres du même genre à des fins de chauffage, **caractérisé en ce que**
a) des éléments d'étiquetage, de marquage ou de codage sont ajoutés aux pellets avant, pendant ou après le processus de compression ou entre le processus de refroidissement ou le placement dans l'espace d'entreposage du consommateur final, lesquels sont distinguables des pellets sans marquage;
b) la proportion des éléments d'étiquetage, de marquage ou de codage constituant une fraction minimale de la quantité totale des pellets, et
c) les éléments d'étiquetage, de marquage ou de codage sont mélangés répartis de la manière la plus uniforme possible parmi la quantité des pellets sans codage.

2. Procédé selon la revendication 1, **caractérisé en ce que** les éléments d'étiquetage, de marquage ou de codage sont mélangés mécaniquement et de manière dosée avec le lot des pellets dans un rapport de mélange continu.

3. Procédé selon la revendication 1, **caractérisé en ce que** les éléments d'étiquetage, de marquage ou de codage sont mélangés au lot de pellets de telle sorte que dans le lot de pellets, ils sont identifiables de l'extérieur à l'oeil nu ou à l'aide d'auxiliaires.

4. Procédé selon l'une des revendications 1-3, **caractérisé en ce que** les pellets sortant de la presse ou de l'installation de refroidissement et les éléments provenant d'une machine à étiquetage ou marquage, sont mélangés dans un rapport de mélange modifiable avec une faible proportion des éléments d'étiquetage, de marquage ou de codage dans un lot de pellets.

5. Procédé selon la revendication 1, **caractérisé en ce qu'**une petite partie des pellets fabriqués dans la presse sont munis pendant ou consécutivement au processus de compression d'une étiquette, d'un marquage ou d'un codage sur leur surface par modification de la forme ou de la structure de cette surface.

6. Procédé selon la revendication 1, **caractérisé en ce qu'**au moins une partie des pellets fabriqués dans la presse pendant ou consécutivement au processus de pressage sont inoculés avec un codage lisible par une machine, par exemple avec des particules de métal pour traçage magnétique ultérieur, avec une puce à mémoire pour lecture électronique ultérieure ou sont munies de substances marqueuses, par exemple des substances chimiques, des substances métalliques ou autres analogues, ou si on le souhaite avec des substances à la radioactivité minimale, etc.

7. Procédé selon la revendication 1, **caractérisé en ce que** des éléments supplémentaires d'étiquetage, de marquage ou de codage sous forme de pellet sont mélangés aux pellets sans codage, **en ce que** ces éléments supplémentaires sont influencés par traitement, en particulier par chargement, application, ajout ou inoculation de pellets par étiquetages, marquages ou codages qui modifient la forme extérieure ou la structure ou, selon le cas, les propriétés intérieures des pellets.

8. Procédé selon la revendication 7, **caractérisé en ce que** les éléments d'étiquetage, de marquage ou de codage sont mélangés uniformément de manière dosée et dans un faible rapport prédéfini de mélange avec les pellets qui sortent de la presse ou du refroidisseur et sont empilés en vrac ou le sont pendant le transport ou lors d'un entreposage temporaire.

9. Procédé selon la revendication 1, **caractérisé en ce que** les éléments d'étiquetage, de marquage ou de codage sont fabriqués en un matériau qui est combustible sans résidu, qui présente une structure et une résistance qui ne posent aucun problème mécanique et qui est, à lui seul, visible ou, selon le cas, reconnaissable dans une pile de pellets.

10. Procédé selon la revendication 1, **caractérisé en ce que** les pellets sont étiquetés ou, selon le cas, codés avec des substances de marquage et **en ce qu'**on utilise comme substances de marquage des composés ou, selon le cas, des substances qui ne se trouvent pas dans la nature, des traces de substances radioactives, des traces de métaux ou autres substances traçables de ce genre qui sont ajoutées, comme on choisit, au matériau de départ pour la fabrication des pellets ou aux pellets lors de la fabrication, ou qui sont appliquées à la surface des pellets.

11. Procédé selon la revendication 10, **caractérisé en ce que** les pellets sont modifiés sur leur surface ou dans leur forme extérieure et **en ce que** ces modifications sont réalisées par des outils de formage dans la presse ou par usinage ou, selon le cas, traitement ultérieurs.

12. Procédé selon la revendication 9 ou 10, **caractérisé en ce que** les éléments d'étiquetage et de marquage sont colorés en couleur de contraste par rapport aux pellets ou **en ce que**, comme on choisit, une petite partie des pellets eux-mêmes sont colorés intégralement ou sur leur surface.

13. Procédé selon l'une ou plusieurs des revendications 10-12, **caractérisé en ce que** les éléments d'étiquetage ou de marquage ou, comme on choisit, une petite partie des pellets eux-mêmes sont munis d'empreintes, de marques, d'impressions, d'un code de producteur ou d'autres codages appropriés.

14. Procédé selon l'une des revendications 10-13, **caractérisé en ce que** les éléments d'étiquetage ou de marquage ou, comme on choisit, les pellets eux-mêmes sont munis d'une couche superficielle réfléchissante ou fluorescente.

15. Procédé selon l'une ou plusieurs des revendications précédentes, **caractérisé en ce que** les éléments d'étiquetage ou de marquage ou, comme on choisit, les pellets eux-mêmes sont pourvus de marquages de métal, de particules électriquement ou magnétiquement conductrices ou de revêtements, de puces de mémoire identifiables de l'extérieur ou de marquages appropriés relatifs au fabricant ou de codages.

16. Procédé selon la revendication 1, **caractérisé en ce que** les éléments d'étiquetage ou de marquage sont façonnés en découpes de lattes de bois, de lamelles de bois ou autres analogues, en particulier découpés dans le sens longitudinal ou transversal par rapport à la fibre.
